# EUROPEAN PATENT SPECIFICATION

(11) **EP 1 703 692 B1**
(45) Date of publication and mention of the grant of the patent: **21.05.2008**
(21) Application number: 05251692.9
(22) Date of filing: 19.03.2005
(51) Int. Cl.: H04L 29/06

(54) **Apparatus and method for resolving conflicts in the IKE protocol**
Vorrichtung und Verfahren zur Lösung von Konflikten im IKE-Protokoll
Dispositif et procédé pour la resolution de conflits dans le protocol IKE

(43) Date of publication of application: 20.09.2006
(73) Proprietor: ZyXEL Communications Corporation, Hsin-Chu, Taiwan (TW)
(72) Inventor: Chen, Chia-Yuan, Hsin-Chu (TW); Chiang, Chi-Wei, Hsin-Chu (TW)
(74) Representative: Kühn, Armin

(56) References cited:
- HARKINS D CARREL CISCO SYSTEMS D: "The Internet Key Exchange (IKE)" IETF STANDARD, INTERNET ENGINEERING TASK FORCE, IETF, CH, November 1998 (1998-11), XP015008193 ISSN: 0000-0003

## Description

### BACKGROUND OF THE INVENTION

### 1. Field of the Invention

The present invention relates to an apparatus for avoiding network communication conflict and method for the same, and more particularly to an apparatus for avoiding IKE process conflict and method for the same.

### 2. Description of the Prior Art

As the prevailing of Internet, the communication and encryption technology are also under extensive research. Among those encryption techniques, the IPSec is most attractive encryption and tunnel one because its low cost and excellent security. Therefore, IPSec is extensively used for business application.

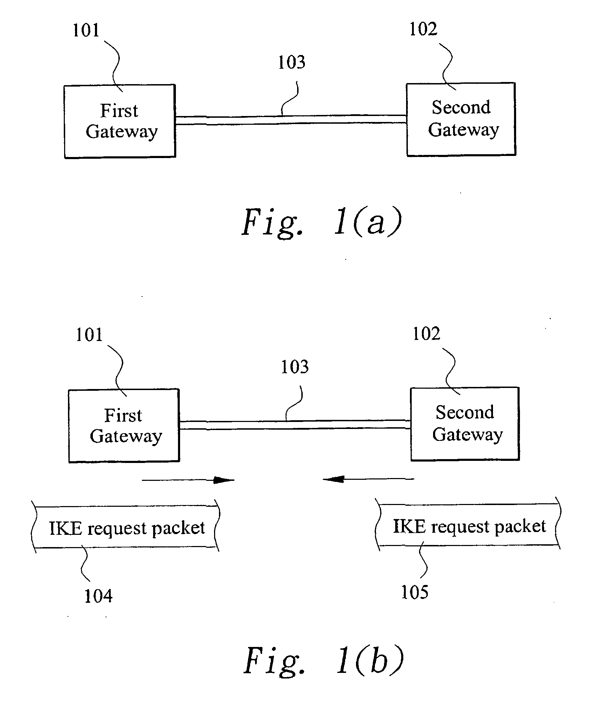

**Fig. 1(a)** shows a prior art IPSec topology, wherein a first gateway **101** functioning as an initiator communicates with a second gateway **102** functioning as a responder through an Internet Key Exchange (IKE) communication protocol.

More particularly, the first gateway **101** functioning as an initiator is connected with a second gateway **102** functioning as a responder through a channel **103.** The communication based on IKE protocol is established through a PING-PONG process, where the first gateway **101** continues sending IKE request packet to the second gateway **102** and the second gateway **102** responses the IKE request packet. The PING-PONG process is performed until the communication channel is established.

However, a conflict situation occurs when the second gateway **102** also functions as an initiator. As shown in **Fig. 1(b)****,** there are two gateways sending the IKE request packet **104** and the IKE request packet **105** simultaneously and an error time happens.

The conventional solution to this error condition is to wait for the error time or the IKE request packet is continuously sent. However, this will result in slowing down IKE communication or even network congestion. In worse scenario, the IKE communication is failed or an excessive long time is needed to establish the IKE communication.

Therefore, solutions for solving the conflict problem for current IPSec topology are desirable.

Harkins D. and Carrel D. of Cisco Systems describe in their paper entitled "The Internet Key Exchange (IKE)", IETF Standard, Internet Engineering Task Force, CH, November 1998, an Internet standards track protocol obtaining authenticated keying material for use with security associations.

### SUMMARY OF THE INVENTION

The present invention provides a novel method for network communication, wherein the role of the gateway is adaptively changed for enhancing IKE communication efficiency.

Accordingly, the present invention provides a method and an apparatus for avoiding IKE process conflict having the technical features of the independent claims. Preferred embodiments are described in the dependent claims.

The method for avoiding IKE process conflict comprises steps in that a first gateway sends a first IKE request packet and receives a second IKE request packet from a second gateway, and a decision step is performed to determine the first gateway to be one of an initiator and a responder.

The first gateway drops the second IKE request packet and functions as the initiator when the first gateway is determined to be the initiator. Moreover, the first gateway cancels the first IKE request packet and functions as the responder when the first gateway is determined to be the responder. Afterward, the first gateway performs IKE communication in response to the second IKE request packet. The first IKE request packet and the second IKE request packet function to initiator request. In the present invention, the first and the second gateway can adjust the role of initiator and responder dynamically. In other word, when one party is initiator, the other party is set to responder automatically to reduce communication setup time.

The above-mentioned decision step comprises the steps of obtaining cookies from a header of the first IKE request packet and a header of the second IKE request packet; and performing a comparison step to determine a responder from the first gateway and the second gateway by comparing the cookies.

The above-mentioned comparison step comprises the steps of computing a second digest according to the second IKE request packet; computing a first digest according to the first IKE request packet; comparing the first digest with the second digest; setting the first gateway as the initiator when the first digest is larger than the second digest; and setting the first gateway as the responder when the first digest is smaller than the second digest. In above steps, the first digest and the second digest are computed from the first IKE request packet and the second IKE request packet by hash process.

Moreover, the apparatus for avoiding IKE process conflict comprises a first gateway sending a first IKE request packet; a second gateway sending a second IKE request packet; and a controller configured for performing a decision step to determine the first gateway to be one of an initiator and a responder. The first gateway drops the second IKE request packet and functions as the initiator when the first gateway is determined to be the initiator. The first gateway cancels the first IKE request packet and functions as the responder when the first gateway is determined to be the responder. The first gateway performs IKE communication in response to the second IKE request packet.

### BRIEF DESCRIPTION OF THE DRAWINGS

The features of the invention believed to be novel are set forth with particularity in the appended claims. The invention itself however may be best understood by reference to the following detailed description of the invention, which describes certain exemplary embodiments of the invention, taken in conjunction with the accompanying drawings in which:

**Figs. 1(a)** and **1(b)** show prior art IPSec topology;

**Fig. 2** shows a schematic diagram of the apparatus for avoiding IKE process conflict according to a preferred embodiment of the present invention;

**Fig. 3** shows one feasible format of the header in the IKE request packet;

**Fig. 4** shows a comparison step according to a preferred embodiment of the present invention; and

**Fig. 5** shows the flowchart for implementing the method for avoiding IKE process conflict according to a preferred embodiment of the present invention;

### DETAILED DESCRIPTION OF THE INVENTION

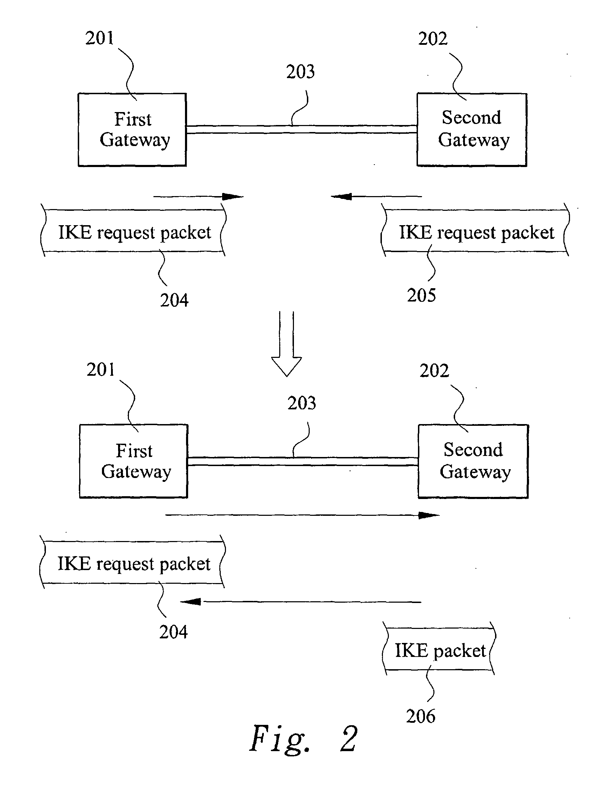

**Fig. 2** shows a schematic diagram of the apparatus for avoiding IKE process conflict according to a preferred embodiment of the present invention. As shown in this figure, at the beginning, both the gateway **201** and the gateway **202** function as initiators and send a first IKE request packet **204** and a second IKE request packet **205** to each other, respectively, through a channel **203** connected therebetween. When this conflict occurs, both of the gateway **201** and the gateway **202** will drop the first IKE request packet **204** and establish communication therebetween based on the second IKE request packet **205.** Moreover, the gateway **202** will function as responder and sends an IKE packet **206** to the gateway **201** in response to the first IKE request packet **204.**

The above procedure requires a decision step for determining a responder between the two gateways. The decision step is performed by a cookie from headers in the first IKE request packet **204** and the second IKE request packet **205.**

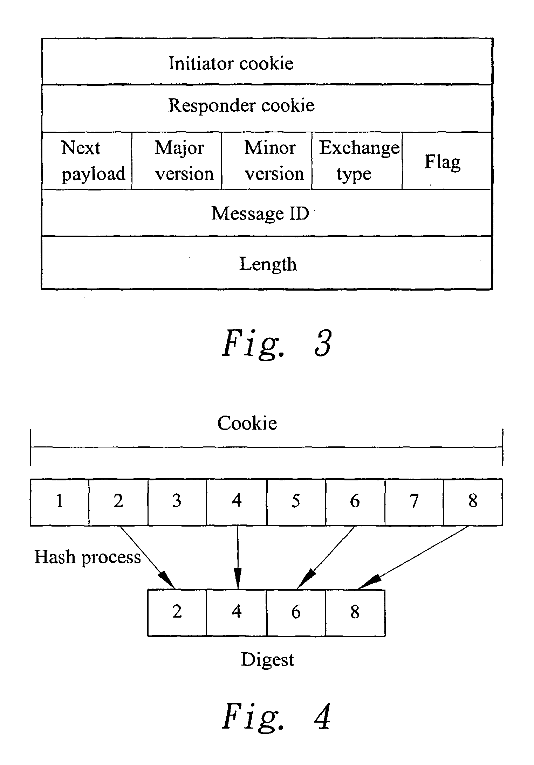

**Fig. 3** shows one feasible format of the header in the first IKE request packet **204** and the second IKE request packet **205.** The header comprises fields such as initiator cookie, responder cookie, next payload, major version, minor version, exchange type, flag, message ID and length. Those fields are well known art and are not described in detail here.

The above-demonstrated header structure is one of feasible choices and is not intended to be limitation of the present invention. The cookie is an 8 bytes random number and is part of the IKE packet header for each IKE connection. In other word, the cookie field has fixed position and length, and the content thereof is changeable for each IKE connection.

When the first gateway receives the second IKE request packet **205,** the first gateway obtains a cookie from the second IKE request packet **205,** and then obtains another cookie from the first IKE request packet **204** sent therefrom. One of the two gateways is determined to be the responder by the two cookies through a comparison step.

**Fig. 4** shows a comparison step according to a preferred embodiment of the present invention. The first gateway and the second gateway perform a hash process to the received cookies to acquire a 4 bytes digest from the 8 bytes cookie. Moreover, the 8 bytes cookie can be processed to information of reduced bytes number by other process than hash process.

Thereafter, the two digests derived from the two cookies are compared. The gateway with larger digest is used as initiator and the gateway with smaller digest is used as responder. The above-mentioned steps for establishing IKE channel involves complicated parametric computation; therefore, those steps are executed by external module or controller such as CPU (not shown). Moreover, those steps can also be executed by gateway itself or hardware accelerator if the hardware accelerator has sufficient computation ability.

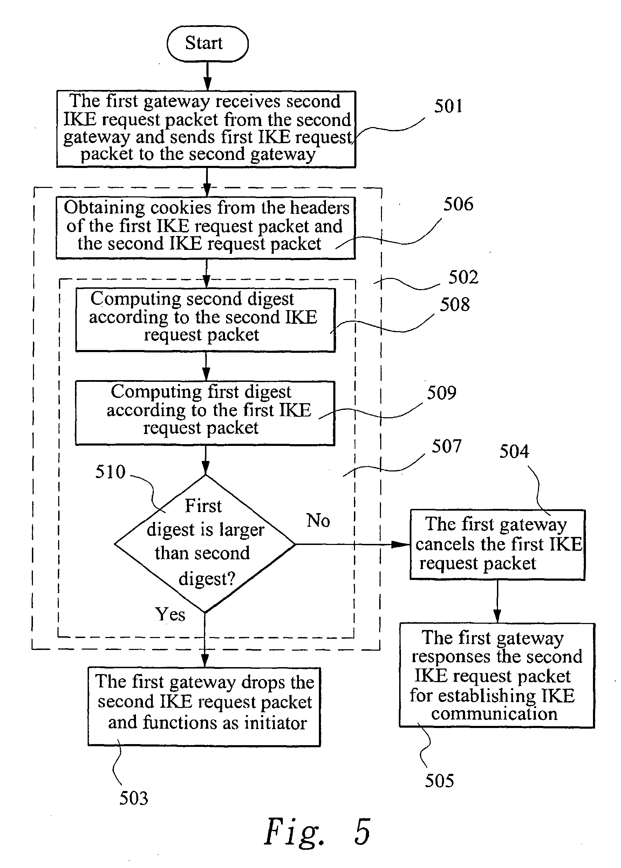

**Fig. 5** shows the flowchart for implementing the method for avoiding IKE process conflict according to a preferred embodiment of the present invention. In step **501,** the first gateway receives a second IKE request packet from the second gateway and sends a first IKE request packet to the second gateway. The first gateway will function as responder without conflict if the second IKE request packet is received before sending of the first IKE request packet by the first gateway. However, the conflict situation where both the first gateway and the second gateway send the first IKE request packet and the second IKE request packet simultaneously should be solved.

In a decision step **502,** the first gateway is determined to be either an initiator or a responder. In case that the first gateway is an initiator, a step **503** is performed and the first gateway will drop the second IKE request packet and function as an initiator. In case that the first gateway is a responder, a step **504** is performed and the first gateway will cancel the first IKE request packet and then a step **505** is performed. In the step **505,** the first gateway function as a responder and responses the second IKE request packet for establishing IKE communication.

According to a preferred embodiment of the present invention, the decision step comprises step **506** and the comparison step **507.** The step **506** fetches cookies from the headers of the first IKE request packet and the second IKE request packet.

According to one preferred embodiment of the comparison step **507** includes sub steps **508, 509** and **510.** In sub step **508,** the second digest is computed according to the second IKE request packet. In step **509,** the first digest is computed according to the first IKE request packet. The step **510** judges whether the first digest is larger than the second digest. If true, the first gateway functions as initiator and the step **503** is performed; else the second gateway functions as responder and the steps **504** and **505** are performed.

The above-described decision step and comparison step can be distinct from the preferred embodiment and varied by those skilled in the related.

To sum up, the apparatus and method for avoiding IKE process conflict according to the present invention can set one of the two gateways competing for initiator to a responder when conflict occurs. Therefore, the waiting time is reduced and the network efficiency can be enhanced.

Although the present invention has been described with reference to the preferred embodiment thereof, it will be understood that the invention is not limited to the details thereof. Various substitutions and modifications have suggested in the foregoing description, and other will occur to those of ordinary skill in the art. Therefore, all such substitutions and modifications are intended to be embraced within the scope of the invention as defined in the appended claims.

## Claims

1. A method for avoiding IKE process conflict in a communication system comprising a first gateway (201) and a second gateway (202), the method comprising steps of:
the first gateway (201) sending a first IKE request packet (204) to the second gateway (202) and receiving a second IKE request packet (205) from the second gateway (202);
the second gateway (202) sending the second IKE request packet (205) to the first gateway (201) and receiving the first IKE request packet (204) from the first gateway (201); and
the first and second gateways (201, 202) obtaining cookies from a header of the first IKE request packet (204) and a header of the second IKE request packet (205);
the method being **characterized by**:
determining one of the first and second gateways (201, 202) as an initiator and another one of the first and
second gateways (201, 202) as a responder by comparing the cookies in the headers.

2. The method for avoiding IKE process conflict as in claim 1, further comprising:
computing a first digest from the cookies in the header of the first IKE request packet (204);
computing a second digest from the cookies in the header of the second IKE request packet (205); and
deciding the gateway with a larger digest as the initiator and the gateway with a smaller digest as the responder.

3. The method for avoiding IKE process conflict as in claim 2, wherein the gateway determined as responder cancels the IKE request packet of the gateway determined as responder, and the gateway determined as initiator cancels the IKE request packet of the gateway determined as responder.

4. The method for avoiding IKE process conflict as in claim 1, wherein the header of each packet comprises fields of initiator cookie, responder cookie, next payload, major version, minor version, exchange type, flag, message ID and length.

5. The method for avoiding IKE process conflict as in claim 1, wherein the first gateway (201) sends the first IKE request packet (204) at substantially same time when the second gateway (202) sends the second IKE request packet (205).

6. The method for avoiding IKE process conflict as in claim 2, wherein the first digest and the second digest are computed from the first IKE request packet (204) and the second IKE request packet (206) by hash process.

7. An apparatus for avoiding IKE process conflict comprising:
a first gateway (201) configured to send a first IKE request packet (204) to a second gateway (202);
the second gateway (202) configured to send a second IKE request packet (205) to the first gateway (201); the apparatus being **characterized by**:
a controller configured for finding cookies in headers of the first and second IDE request packets (204, 205), and determining one of the first and second gateways (201, 202) as an initiator by comparing the cookies for the first and second gateways (201, 202);
wherein the gateway determined as responder cancels the IKE request packet of the gateway determined as responder, and the gateway determined as initiator cancels the IKE request packet of the gateway determined as responder.

8. The apparatus for avoiding IKE process conflict as in claim 7, wherein the first IKE request packet (204) and the second IKE request packet (205) function to initiator request.

9. The apparatus for avoiding IKE process conflict as in claim 8, wherein the header of each packet comprises fields of initiator cookie, responder cookie, next payload, major version, minor version, exchange type, flag, message ID and length.

## Patentansprüche

1. Verfahren zum Vermeiden von IKE-Prozesskonflikten in einem Kommunikationssystem, das ein erstes Gateway (201) und ein zweites Gateway (202) aufweist, wobei das Verfahren die Schritte aufweist:
das erste Gateway (201) sendet ein erstes IKE-Anforderungspaket (204) an das zweite Gateway (202) und empfängt ein zweites IKE-Anforderungspaket (205) von dem zweiten Gateway (202);
das zweite Gateway (202) sendet das zweite IKE-Anforderungspaket (205) an das erste Gateway (201) und empfängt das erste IKE-Anforderungspaket (204) von dem ersten Gateway (201); und
das erste und das zweite Gateway (201, 202) erhalten Profildateien von einem Dateikopf des ersten IKE-Anforderungspakets (204) und einem Dateikopf des zweiten IKE-Anforderungspakets (205);
wobei das Verfahren **gekennzeichnet ist durch**:
Festlegen des ersten oder des zweiten Gateways (201, 202) als Initiator und des anderen des ersten und des zweiten Gateways (201, 202) als Beantworter mittels Vergleichens der Profildateien in den Dateiköpfen.

2. Verfahren zum Vermeiden von IKE-Prozesskonflikten gemäß Anspruch 1, ferner aufweisend:
Berechnen eines ersten Digests anhand der Profildateien in dem Dateikopf des ersten IKE-Anforderungspakets (204);
Berechnen eines zweiten Digests anhand der Profildateien in dem Dateikopf des zweiten IKE-Anforderungspakets (205); und
Bestimmen des Gateways mit einem größeren Digest als den Initiator und des Gateways mit einem kleineren Digest als den Beantworter.

3. Verfahren zum Vermeiden von IKE-Prozesskonflikten gemäß Anspruch 2, wobei das als Beantworter festgelegte Gateway das IKE-Anforderungspaket des als Beantworter festgelegten Gateways zurücknimmt und das als Initiator festgelegte Gateway das IKE-Anforderungspaket des als Beantworter festgelegten Gateways zurücknimmt.

4. verfahren zum Vermeiden von IKE-Prozesskonflikten gemäß Anspruch 1, wobei der Dateikopf jedes Pakets Felder für Initiator-Profildateien, Beantworter-Profildateien, nächste Nutzdaten, größere Version, kleinere Version, Austauschtyp, Blockbegrenzung, Meldungs-ID und Länge aufweist.

5. Verfahren zum Vermeiden von IKE-Prozesskonflikten gemäß Anspruch 1, wobei das erste Gateway (201) das erste IKE-Anforderungspaket (204) zu im Wesentlichen derselben Zeit schickt, wenn das zweite Gateway (202) das zweite IKE-Anforderungspaket (205) sendet.

6. Verfahren zum Vermeiden von IKE-Prozesskonflikten gemäß Anspruch 2, wobei der erste Digest und der zweite Digest anhand des ersten IKE-Anforderungspakets (204) und des zweiten IKE-Anforderungspakets (206) mittels eines Hash-Prozesses berechnet werden.

7. Vorrichtung zum Vermeiden von IKE-Prozesskonflikten, aufweisend:
ein erstes Gateway (201), das dazu konfiguriert ist, ein erstes IKE-Anfoxderungspaket (204) an ein zweites Gateway (202) zu senden;
ein zweites Gateway (202), das dazu konfiguriert ist, ein zweites IKE-Anforderungspaket (205) an das erste Gateway (201) zu senden;
wobei die Vorrichtung **gekennzeichnet ist durch**:
einen Kontroller, der zum Finden von Profildateien in Dateiköpfen des ersten und des zweiten IKE-Anforderungspakets (204, 205) und zum Festlegen des ersten oder des zweiten Gateways (201, 202) als Initiator mittels Vergleichens der Profildateien für das erste und das zweite Gateway (201, 202) konfiguriert ist;
wobei das als Beantworter festgelegte Gateway das IKE-Anforderungspaket des als Beantworter festgelegten Gateways zurücknimmt und das als Initiator festgelegte Gateway das IKE-Anforderungspaket des als Beantworter festgelegten Gateways zurücknimmt.

8. Vorrichtung zum Vermeiden von IKE-Prozesskonflikten gemäß Anspruch 7, wobei das erste IKE-Anforderungspaket (204) und das zweite IKE-Anforderungspaket (205) auf die Initiatoranforderung hin funktionieren.

9. Vorrichtung zum Vermeiden von IKE-Prozesskonflikten gemäß Anspruch 8, wobei der Dateikopf jedes Pakets Felder für Initiator-Profildateien, Beantworter-Profildateien, nächste Mutzdaten, größere Version, kleinere Version, Austauschtyp, Blockbegrenzung, Meldungs-ID und Länge aufweist.

## Revendications

1. Procédé permettant d'empêcher un conflit de processus IKE dans un système de communication comprenant une première passerelle (201) et une seconde passerelle (202), le procédé comprenant les étapes suivantes :
la première passerelle (201) envoyant un premier paquet de requête IKE (204) à la seconde passerelle (202), et recevant un second paquet de requête IKE (205) de la part de la seconde passerelle (202) ;
la seconde passerelle (202) envoyant le second paquet de requête IKE (205) à la première passerelle (201), et recevant le premier paquet de requête IKE (204) de la part de la première passerelle (201) ; et
la première et la seconde passerelles (201, 202) obtenant des cookies provenant d'un en-tête du premier paquet de requête IKE (204) et d'un en-tête du second paquet de requête IKE (205) ;
le procédé étant **caractérisé par** :
la détermination de l'une de la première et de la seconde passerelles (201, 202) comme étant un initiateur, et de l'autre de la première et de la seconde passerelles (201, 202) comme étant un répondeur en comparant les cookies dans les en-têtes.

2. Procédé permettant d'empêcher un conflit de processus IKE selon la revendication 1, comprenant en outre :
le calcul d'un premier prétraitement à partir des cookies dans l'en-tête du premier paquet de requête IKE (204) ;
le calcul d'un second prétraitement à partir des cookies dans l'en-tête du second paquet de requête IKE (205) ; et
la sélection de la passerelle ayant le prétraitement le plus important comme étant l'initiateur, et de la passerelle ayant le prétraitement le moins important comme étant le répondeur.

3. Procédé permettant d'empêcher un conflit de processus IKE selon la revendication 2, dans lequel la passerelle déterminée comme étant le répondeur annule le paquet de requête IKE de la passerelle déterminée comme étant le répondeur, et la passerelle déterminée comme étant l'initiateur annule le paquet de requête IKE de la passerelle déterminée comme étant le répondeur.

4. Procédé permettant d'empêcher un conflit de processus IKE selon la revendication 1, dans lequel l'en-tête de chaque paquet comprend des champs de cookie d'initiateur, de cookie de répondeur, de charge utile suivante, de version majeure, de version mineure, de type d'échange, de marqueur, d'ID de message et de longueur.

5. Procédé permettant d'empêcher un conflit de processus IKE selon la revendication 1, dans lequel la première passerelle (201) envoie le premier paquet de requête IKE (204) sensiblement en même temps que la seconde passerelle (202) envoie le second paquet de requête IKE (205).

6. Procédé permettant d'empêcher un conflit de processus IKE selon la revendication 2, dans lequel le premier prétraitement et le second prétraitement sont calculés à partir du premier paquet de requête IKE (204) et du second paquet de requête IKE (206) par un processus de hachage.

7. Appareil permettant d'empêcher un conflit de processus IKE comprenant :
une première passerelle (201) configurée afin d'envoyer un premier paquet de requête IKE (204) une seconde passerelle (202) ;
la seconde passerelle (202) configurée afin d'envoyer un second paquet de requête IKE (205) à la première passerelle (201) ;
l'appareil étant **caractérisé par** :
un contrôleur configuré afin de trouver des cookies dans les en-têtes du premier et du second paquets de requête IKE (204, 205), et de déterminer l'une de la première et de la seconde passerelles (201, 202) comme étant un initiateur en comparant les cookies pour la première et la seconde passerelles (201, 202) ;
dans lequel la passerelle déterminée comme étant un répondeur annule le paquet de requête IKE de la passerelle déterminée comme étant un répondeur, et la passerelle déterminée comme étant un initiateur annule le paquet de requête IKE de la passerelle déterminée comme étant un répondeur.

8. Appareil permettant d'empêcher un conflit de processus IKE selon la revendication 7, dans lequel le premier paquet de requête IKE (204) et le second paquet de requête IKE (205) fonctionnent une requête d'initiateur.

9. Appareil permettant d'empêcher un conflit de processus IKE selon la revendication 8, dans lequel l'en-tête de chaque paquet comprend des champs de cookie d'initiateur, de cookie de répondeur, de charge utile suivante, de version majeure, de version mineure, de type d'échange, de marqueur, d'ID de message et de longueur.
